# EUROPÄISCHE PATENTSCHRIFT

(11) **EP 2 425 706 B1**
(45) Veröffentlichungstag und Bekanntmachung des Hinweises auf die Patenterteilung: **21.09.2016**
(21) Anmeldenummer: 11187099.4
(22) Anmeldetag: 28.02.2008
(51) Int. Cl.: A01G 3/06

(54) **Grasschere mit einer Griffvorrichtung**
Grass shears with a handle device
Cisaille à gazon dotée d'un dispositif de préhension

(30) Priorität: 15.03.2007 DE 102007013477; 04.06.2007 DE 102007026974
(43) Veröffentlichungstag der Anmeldung: 07.03.2012
(62) Teilanmeldung aus: 08716088.3
(73) Patentinhaber: HUSQVARNA AB, 561 82 Huskvarna (SE)
(72) Erfinder: Keim, Norbert, 89281 Altenstadt (DE); Lameli, Peter, 72622 Nürtingen (DE); Aleker, Hubert, 89597 Munderkingen (DE); Häufele, Reiner, 88471 Laupheim (DE); Locher, Ottmar, 89079 Ulm (DE); Reichart, Vincent, 89075 Ulm (DE); Schiedt, Christoph, 88483 Burgrieden (DE)
(74) Vertreter: Finkele, Rolf

(56) Entgegenhaltungen:
- EP-A- 0 314 198
- DE-U1- 20 019 679
- DE-U1- 20 203 616
- DE-U1-202006 016 807
- US-A- 3 438 130
- US-A1- 2003 167 640

## Beschreibung

Die Erfindung betrifft eine Grasschere mit einer Griffvorrichtung umfassend einen mit einem Gehäuse verbundenen Griffkörper mit einem Griffteil und einen relativ zu dem Griffkörper verschwenkbaren Schwenkhebel zur Betätigung eines schwenkbaren Scherblatts.

Aus der DE 2 445 887 A1 ist eine motorbetriebene Heckenschere bekannt, wobei an einem hinteren Ende eines Gehäuses der Heckenschere, d. h. einem Messern oder Scherblättern der Heckenschere entgegengesetzten Ende, ein bogenförmiges Griffteil zum Ergreifen der Heckenschere angeordnet ist. Das Griffteil ist starr mit dem Gehäuse verbunden und erstreckt sich L-förmig von einem Anbringungspunkt hinten unten an dem Gehäuse nach oben und vorne, wobei das vordere Ende nicht über die Scherblätter der Heckenschere ragt.

Aus der US 2003/0167640 A1 ist eine handbetriebene Gartenschere bekannt, wobei an einem vorderen Ende eines Griffteils Scherblätter derart angeordnet sind, dass im üblichen Gebrauch die Scherblätter in einer vertikal angeordneten Ebene liegen. An einem hinteren Ende des Griffteils ist ein Hebel zum Verschwenken eines Scherblatts angeordnet, welcher sich im Gebrauch unterhalb des Griffteils erstreckt. Eine Schwenkachse des Hebels ist dabei parallel zu einer Schwenkachse der Scherblätter oder Messer.

Neben Hecken- oder Gartenscheren sind sogenannte Gras- oder Rasenscheren bekannt, welche beispielsweise in der Rasenpflege zum Erzielen eines exakten Rasenkantenschnitts eingesetzt werden. Scherblätter liegen dabei im Gebrauch üblicherweise in einer im Wesentlichen horizontal angeordneten Schneidebene und sind für eine Schneidbewegung um eine vertikal ausgerichtete Schwenkachse zueinander verschwenkbar. Aus der US 3,438,130 ist eine Grasschere mit einer Griffvorrichtung, umfassend ein Griffteil und einen beweglich daran angebrachten Hebel, zum Bewegen eines verschwenkbaren Scherblatts, bekannt. Das Griffteil ist im Wesentlichen L-förmig gestaltet, wobei an einem freien Ende eines im Gebrauch in der Schneidebene angeordneten Schenkels ein feststehendes Scherblatt angeordnet ist. An einem freien Ende des zweiten Schenkels ist der Hebel schwenkbar angebracht. Die Schenkel sind in einem Winkel von ca. 60° zueinander angeordnet. Für eine Bedienung wird die Grasschere dabei von hinten gegriffen.

Es ist eine Aufgabe der vorliegenden Erfindung, eine ergonomisch günstig ergreifbare Grasschere zu schaffen.

In einer Ausgestaltung der Erfindung ist die Griffvorrichtung so an dem Gehäuse angebracht ist, dass das Griffteil sich von dem hinteren Ende der Grasschere in Richtung eines vorderen Endes erstreckt, und die Grasschere an dem Griffteil für eine Handhabung so ergreifbar ist, dass der Schwerpunkt der Grasschere sich unterhalb des Griffteils befindet;

Das Griffteil ist beabstandet zu der Schneidebene der Grasschere angeordnet, wobei sich im normalen Gebrauch der Grasschere das Griffteil oberhalb der Schneidebene befindet. Durch das nach vorne geführte Griffteil ergibt sich für eine Betätigung eine ergonomisch günstige Schwerpunktlage bezüglich einer die Grasschere ergreifenden Benutzerhand. Das Gehäuse liegt in einer Ausgestaltung im Wesentlichen in der Schneidebene. Das Griffteil erstreckt sich in einer Ausgestaltung im Wesentlichen parallel zu der Schneidebene. In anderen Ausgestaltungen schließt das Griffteil mit der Schneidebene einen Winkel ein. Der Winkel ist vorzugsweise nicht größer als ca. 45°, um eine Schwerpunktlage der Grasschere unter dem Griffteil auf einfache Weise zu realisieren.

In einer Ausgestaltung der Erfindung weist der Griffkörper ein Basisteil auf, wobei das Griffteil über das Basisteil mit dem Gehäuse verbunden ist und das Basisteil mit der Schneidebene einen Neigungswinkel zwischen 30° und 90°, vorzugsweise zwischen 40° und 80°, insbesondere zwischen 50° und 70° einschließt. Durch das Basisteil ist ein Abstand zwischen dem Griffteil und dem Gehäuse realisierbar.

In einer Ausgestaltung der Erfindung ist an einem freien Ende des Griffteils ein nach außen weisender Vorsprung ausgeformt. Zum Ergreifen der Grasschere kann der Daumen einer Benutzerhand auf einer der Schneidebene abgewandten Seite des Griffteils abgelegt werden, wobei sich die Finger um das Griffteil oder das Griffteil und den Schwenkhebel legen. Durch den Vorsprung kann der Daumen auf dem Griffteil ergonomisch besonders günstig abgelegt werden, so dass eine Grasschere im Gebrauch sicher führbar ist, um eine exakte Rasenkante zu schneiden.

In einer weiteren Ausgestaltung erstreckt sich der Schwenkhebel in einem betätigten Zustand im Wesentlichen parallel zu dem Griffteil des Griffkörpers. Der Schwenkhebel ist mittels einer Achse schwenkbar an dem Griffkörper angeordnet, wobei der Schwenkhebel und das Griffteil unbetätigt V-förmig angeordnet sind. Durch eine Krafteinwirkung auf den Schwenkhebel ist dieser in eine Position verschwenkbar, in welcher der Schwenkhebel im Wesentlichen parallel zu dem Griffteil verläuft. Ein maximaler Öffnungswinkel oder Schwenkwinkel zwischen dem Griffteil und dem Schwenkhebel kann aus ergonomischen Gesichtspunkten optimiert werden. Die Grasschere kann dabei Mittel aufweisen, durch welche ein maximaler Öffnungswinkel begrenzbar und/oder einstellbar ist.

Die Aufgabe wird gelöst durch eine Grasschere mit einer Griffvorrichtung umfassend einen mit einem Gehäuse verbundenen Griffkörper mit einem Griffteil und einen relativ zu dem Griffkörper verschwenkbaren Schwenkhebel zur Betätigung eines schwenkbaren Scherblatts, wobei der Schwenkhebel in einem bezüglich der Längserstreckung des Griffteils hinteren Bereich mit dem Griffkörper verbunden ist. Als hinterer Bereich des Griffteils wird dabei ein Ende bezeichnet, welches beim normalen Ergreifen für einen Gebrauch an einer dem Daumen abgewandten Kante der Hand zu liegen kommt. Finger einer Hand, wie beispielsweise der Zeigefinger und/oder der Mittelfinger, durch welche von den meisten Menschen eine größere Kraft aufbringbar ist, als durch den Ringfinger und/oder den kleinen Finger, sind dabei beim normalen Er greifen des Griffteils und des Schwenkhebels weiter von der Schwenkachse beabstandet als die anderen Finger. Da eine aufzubringende Betätigungskraft zum Verschwenken mit dem Abstand zu der Schwenkachse steigt, ist eine derartige Anordnung aus ergonomischen Gesichtspunkten besonders günstig. Diese Anbringung des Schwenkhebels ist dabei besonders vorteilhaft bei einer Grasschere mit den bereits genannten Merkmalen einsetzbar.

Die Achse für den Schwenkhebel verläuft in normalen Gebrauch senkrecht zu einer Schwenkachse der Scherblätter. Die Achsen sind dabei in Längsrichtung der Grasschere voneinander beabstandet.

In Weiterbildung der Erfindung erfoglt eine Kraftübertragung von dem Schwenkhebel auf das schwenkbare Scherblatt mittels mindestens eines auf Zug belastbaren Kraftübertragungselements, insbesondere eines Bands, eines Seils, eines Drahtseils oder dergleichen, Ein derartiges Kraftübertragungsmittel ist besonders leicht realisierbar, so dass das Gewicht der Grasschere gering gehalten werden kann. Zudem sind derartige Kraftübertragungsmittel kostengünstig herstellbar. Eine maximal übertragbare Zugkraft ist von einer Gestaltung des Kraftübertragungsmittels abhängig. Das Kraftübertragungsmittel sollte dabei derart ausgelegt werden, dass neben Gras zumindest auch kleinere Äste und dergleichen zerschneidbar sind. Eine Verwendung eines Zugseils oder dergleichen ist insbesondere bei einer Anbringung des Schwenkhebels in einem hinteren Bereich des Griffteils vorteilhaft.

In einer Weiterbildung der Erfindung ist mindestes ein Umlenkmittel, insbesondere eine Rolle oder dergleichen, vorgesehen, durch welches das Kraftübertragungselement zwischen dem Schwenkhebel und dem schwenkbaren Scherblatt umgelenkt ist. Die Rolle ist in einer Ausgestaltung mit einem kreisförmigen Querschnitt gestaltet. Es sind auch andere Formen vorteilhaft, wobei durch das Umlenkmittel in einer Ausgestaltung auch eine Kraftübersetzung bewirkt wird.

In Weiterbildung der Erfindung ist das mindestens eine Umlenkmittel schwenkbar in dem Gehäuse und/oder dem Griffkörper gelagert. Durch die schwenkbare Lagerung sind Kraftverluste beim Umlenken des Kraftübertragungsmittels reduzierbar.

In einer weiteren Ausgestaltung der Erfindung sind das Umlenkmittel und das Kraftübertragungselement zumindest teilweise als gemeinsames Bauteil gestaltet. Das Umlenkmittel ist beispielsweise als Umlenkkörper mit mindestens einem seil- oder bandförmigen Fortsatz gestaltbar, wobei Fortsätze mit dem Schwenkhebel oder dem Scherblatt verbindbar sind. Die Fortsätze sind in einer Ausgestaltung der Erfindung getrennt von dem Umlenkmittel, beispielsweise einer Rolle, hergestellt und anschließend mit diesem verbunden. Denkbarerweise ist ein entsprechender Umlenkkörper einstückig, beispielsweise als Spritzgussteil, gefertigt.

In einer Weiterbildung weist der Griffkörper eine Handauflage auf, wobei der Griffkörper an dem Gehäuse in mindestens einer Position anbringbar ist, so dass eine mittlere Ausrichtung der Handauflage einen Neigungswinkel α zwischen 5° und 25°, insbesondere zwischen 10° und 20° mit der Schneidebene einschließt. Die Handauflage kann auch konvex gekrümmt sein, so dass eine gute Anpassung an eine Handinnenfläche möglich ist. Dabei ist eine mittlere Ausrichtung der Handauflage bezüglich einer Schneidebene geneigt. Bei einer derartigen Ausrichtung ist die Grasschere ergonomisch besonders günstig für eine Handhabung zu greifen.

In einer weiteren Ausgestaltung ist der Griffkörper an dem Gehäuse verschwenkbar angebracht, so dass ein Neigungswinkel zwischen dem Griffteil, insbesondere einer Handauflage des Griffteils, und der Schneidebene variierbar ist. Durch Veränderung des Neigungswinkels ist dabei eine Grasschere an unterschiedliche Komfortempfindungen unterschiedlicher Nutzer individuell anpassbar. Eine maximal mögliche Veränderung des Neigungswinkels begrenzt sein. Insbesondere ist der Neigungswinkel so begrenzt, dass der Schwerpunkt bei einer Betätigung unterhalb der Grifffläche verbleibt. Möglicherweise erfolgt die Kraftübertragung von dem Schwenkhebel auf das bewegbare Scherblatt mittels eines Zugseils und einem Umlenkmittel, wobei eine Schwenkachse des Griffkörpers zur Verstellung des Neigungswinkels in etwa gleich einem Zentrum eines Umlenkmittels ist.

Weitere Vorteile der Erfindung ergeben sich aus der nachfolgenden Beschreibung eines Ausführungsbeispiels der Erfindung, das in den Zeichnungen schematisch dargestellt ist.

In den Zeichnungen zeigen:
- Fig. 1:: eine Seitenansicht einer Grasschere mit einer erfindungsgemäßen Griffvorrichtung,
- Fig. 2:: eine geschnittene Darstellung der Seitenansicht der Grasschere gemäß Fig. 1 und
- Fig. 3:: eine Seitenansicht eines Griffkörpers der Grasschere gemäß Fig. 1.

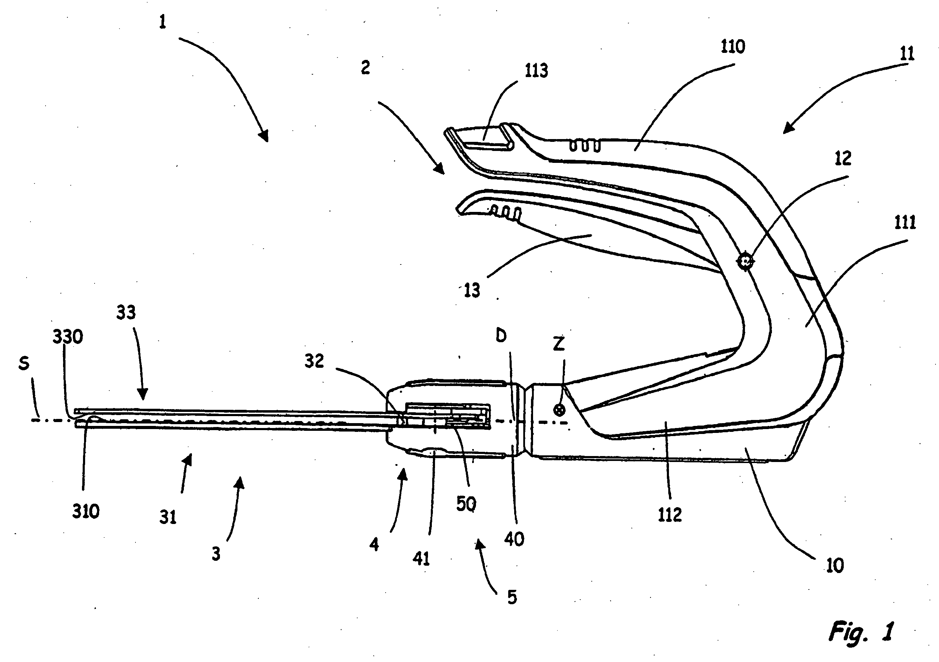

Figur 1 zeigt schematisch eine Seitenansicht einer Grasschere 1 mit einer Griffvorrichtung 2 und einem Messersatz 3. Die Grasschere 1 weist ein Gehäuse 10 mit einem daran angeordneten feststehenden Griffkörper 11 und einem über eine Achse 12 schwenkbar an dem Griffkörper 11 angebrachten bewegbaren Schwenk- oder Handhebel 13 auf. Der Griffkörper 11 und der Schwenkhebel 13 bilden die Griffvorrichtung 2 der Grasschere 1. Der dargestellte Griffkörper 11 ist mit einem Griffteil 110 und einem Basisteil 111 ausgeformt, wobei der Griffkörper 11 so an dem Gehäuse 10 angebracht ist, dass das Basisteil 111 an einem hinteren, dem Messersatz 3 abgewandten Ende der Grasschere 1 angeordnet ist und das Griffteil 110 sich im Wesentlichen parallel zu einer Schneidebene S der Grasschere 1 erstreckt. Das Griffteil 110 ist dabei beabstandet von der Schneidebene S und im normalen Gebrauch der Grasschere 1 oberhalb der Schneidebene S angeordnet. Der Schwenkhebel 13 ist in dem dargestellten, belasteten oder betätigten Zustand an dem Griffkörper 11 so angeordnet, dass der Schwenkhebel 13 sich im Wesentlichen parallel zu dem Griffteil 110 des Griffkörpers 11 erstreckt. Der Schwenkhebel 13 kann in dieser Stellung durch nicht dargestellte Mittel arretiert werden. Zum Schneiden ist der Schwenkhebel 13 um die Schwenkachse 12 verschwenkbar. In dem dargestellten Ausführungsbeispiel ist der Schwenkhebel 13 zwischen dem Griffkörper 11 und der Schneidebene S angeordnet. Für eine Handhabung oder einen Gebrauch ist die Grasschere 1 an dem Griffteil 110 ergreifbar, wobei sich die Finger einer Hand um den Schwenkhebel 13 legen. An einem freien Ende des Griffteils 110 ist ein nach außen weisender Vorsprung 113 ausgeformt. Im Gebrauch kann der Daumen eines Benutzers der Grasschere 1 auf diesem Vorsprung 113 ergonomisch günstig abgelegt werden. Für ein ergonomisch günstiges Ergreifen ist weiter die Achse 12 an dem Basisteil 111 angeordnet. Eine auf den Schwenkhebel 13 zum Verschwenken aufzubringende Kraft wächst mit Abstand von der Achse 12. Eine Anordnung der Achse 12 im Bereich des Basisteils 111 ist daher aus ergonomischen Gesichtspunkten besonders günstig, da ein Ergreifen so möglich ist, dass ein kleiner Finger einer Hand näher an der Achse 12 zu liegen kommt, als beispielsweise ein Zeigefinger der Hand, wobei durch den Zeigefinger eine höhere Kraft aufbringbar ist. Der schematisch dargestellte Schwerpunkt Z der Grasschere 1 liegt dabei bei einem Gebrauch unterhalb der Benutzerhand, so dass eine ergonomisch günstige Handhabung der Grasschere möglich ist.

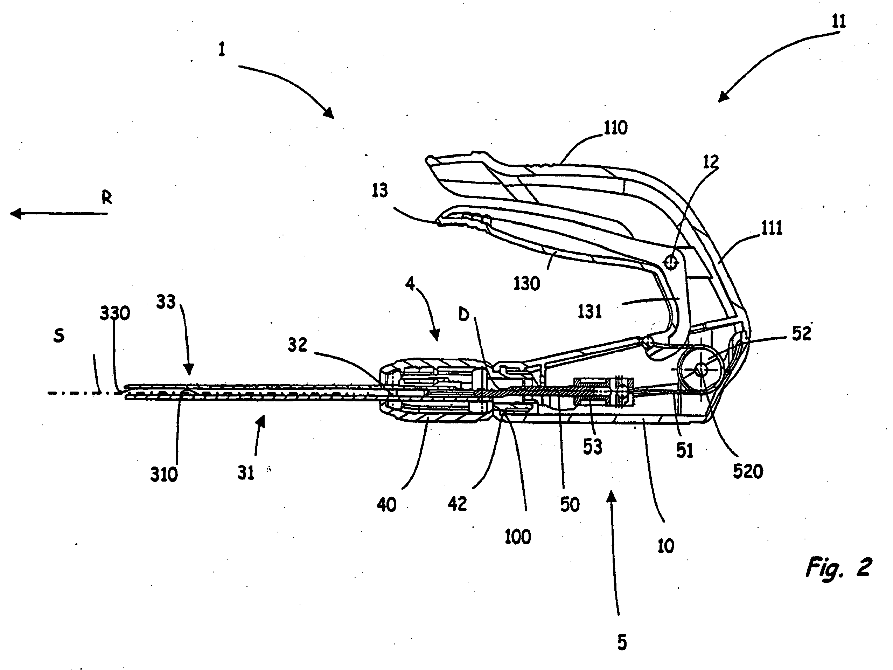

Bei der dargestellten Grasschere 1 ist an dem Basisteil 111 eine Verlängerung 112 vorgesehen, welche das Gehäuse 10 zumindest teilweise abdeckt. Durch einen derartig gestalteten Griffkörper 11 ist durch eine Trennung des Griffkörpers 11 von dem Gehäuse 10 eine in Fig. 2 sichtbare Antriebsmechanik der Grasschere 1 leicht zugänglich. Zudem ist durch die Verlängerung 112 eine einfache Montage möglich.

Der Messersatz 3 der dargestellten Grasschere 1 weist ein feststehendes Scherblatt oder Messer 31 und ein über eine Schwenkachse 32 schwenkbar mit dem feststehenden Messer 31 verbundenes, bewegbares Scherblatt oder Messer 33 auf. Das bewegbare Messer 33 ist über in Fig. 1 nur teilweise sichtbare Kopplungselemente 5 umfassend eine Zugstange 50 mit dem bewegbaren Schwenkhebel 13 verbunden, so dass eine Schwenkbewegung des Schwenkhebels 13 um die Achse 12 in eine Schwenkbewegung des bewegbaren Messers 33 um die Schwenkachse 32 umgesetzt wird. Die Achse 12 und die Schwenkachse 32 verlaufen dabei im Wesentlichen senkrecht zueinander, wobei die Achse 12 in der dargestellten, üblichen Gebrauchsausrichtung der Grasschere 1 im Wesentlichen horizontal und die Schwenkachse 32 im Wesentlichen vertikal angeordnet ist.

In den Figuren sind für eine bessere Darstellung das feststehende Messer 31 und das bewegbare Messer 33 voneinander beabstandet dargestellt. Tatsächlich wird das bewegbare Messer 33 durch eine nicht dargestellte Feder derart belastet, dass es mit dem feststehenden Messer 31 im geöffneten Zustand einen Winkel einschließt und beim Schließen des Messersatzes eine Schneidkante 330 des bewegbaren Messers 33 an einer Schneidkante 310 des feststehenden Messers 31 entlang gleitet, so dass das bewegbare Messer 33 nach und nach aus einer schrägen Stellung in eine zu dem feststehenden Messer 31 parallele Ausrichtung gedrängt wird. Die Schneidebene S entspricht somit im Wesentlichen einer Ebene, in welcher die Schneidkante 310 liegt.

In der dargestellten Ausführungsform ist der Messersatz 3 mittels einer Lagervorrichtung 4 umfassend ein Messergehäuse 40 um eine parallel zu der Schneidebene S angeordnete Drehachse D schwenkbar gelagert. Für eine einfachere Handhabung beim Drehen ist an dem Messergehäuse 40 eine Grifffläche 41 ausgebildet. Das Messergehäuse 40 ist über ein in Fig. 1 nicht sichtbares Gleitlager in dem Gehäuse 10 verschwenkbar gelagert, so dass der in dem Messergehäuse 40 gelagerte Messersatz 3 relativ zu dem Gehäuse 10 um eine Drehachse D drehbar ist. Dabei können nicht dargestellte Rastelemente vorgesehen sein, durch welche der Messersatz 3 in verschiedenen Winkelpositionen für eine Handhabung der Grasschere 1 verrastbar ist. Vorzugsweise wird die Grasschere 1 jedoch so eingesetzt, dass die Schwenkachse 32 wie dargestellt vertikal ausgerichtet ist.

Fig. 2 zeigt die Grasschere 1 gemäß Figur 1 in einer geschnittenen Ansicht. Für Bauteile, welche bereits in Figur 1 dargestellt sind, werden einheitliche Bezugszeichen verwendet, und auf eine ausführliche Beschreibung dieser Bauteile wird verzichtet.

Wie in Fig. 2 erkennbar ist, umfasst die Lagervorrichtung 4 einen radialen Vorsprung 42 an dem Messergehäuse 40, welcher in eine entsprechende Radialnut 100 des Gehäuses 10 für eine verschwenkbare Lagerung eingreift. In einer Ausgestaltung ist dabei ein Verschwenken um 360°, d. h. ein Verdrehen, oder nur ein Verschwenken um Winkel kleiner 360° möglich.

Wie in der Schnittansicht gemäß Fig. 2 weiter erkennbar ist, umfassen die Kopplungselemente 5 zwischen dem bewegbaren Schwenkhebel 13 und dem bewegbaren Messer 33 außer der Zugstange 50 ein mit dem Schwenkhebel 13 wirkverbundenes Kraftübertragungselement, welches in der dargestellten Ausführungsform ein Zugseil 51 ist. Der Schwenkhebel 13 ist in der dargestellten Ausführungsform als Winkel mit einem Betätigungsteil 130 und einem Anbindungsteil 131 gestaltet, wobei die Achse 12 in einem Winkelgrund angeordnet ist. Durch einen Nutzer ist der Betätigungsteil 130 zum Verschwenken ergreifbar. Das Zugseil 51 ist in dem dargestellten Ausführungsbeispiel an einem Ende des Anbindungsteils 131 angebracht. Durch das Zugseil 51 ist eine Schwenkbewegung des Schwenkhebels 13 in eine Verschiebung der Zugstange 50 und damit ein Verschwenken des Messers 33 umsetzbar. In anderen Ausgestaltungen ist das Zugseil 51 direkt mit dem Messer 33 verbunden, wobei das Zugseil 51 beispielsweise auch als Stahl- oder Drahtseil gestaltet sein kann. In der dargestellten Ausführungsform ist das Zugseil 51 über eine Umlenkrolle 52 für eine verbesserte Bewegungseinleitung umgelenkt. Das Zugseil 51 ermöglicht einen direkten und variablen Antrieb des bewegbaren Messers 33, wobei das Zugseil 51 so geführt ist, dass Umlenkverluste gering gehalten werden. Die Umlenkrolle 52 ist in dem dargestellten Ausführungsbeispiel um eine Achse 520 verschwenkbar gelagert.

Das als Zugstange 50 ausgestaltete Zugmittel ist über eine als Zugpunkt gestaltete Befestigungsstelle mit dem bewegbaren Messer 33 verbunden, wobei der Zugpunkt so gewählt ist, dass bei einer Krafteinleitung an dem Zugpunkt beim Schließen des Messersatzes 3 die Schneidkante 330 des bewegbaren Messers 33 in Richtung der Schneidkante 310 des feststehenden Messers 31 gezwungen wird. Dies wird in dem dargestellten Ausführungsbeispiel dadurch erreicht, dass die Zugstange 50 im Zugpunkt zwischen dem feststehenden Messer 31 und dem bewegbaren Messer 33 angeordnet ist, wobei die Schwenkachse 32 in eine Schneidrichtung R betrachtet zwischen Schneidkanten 310, 330 der Messer 31, 33 und dem Zugpunkt angeordnet ist. Die dargestellte Zugstange 50 ist geknickt mit zwei zueinander parallelen Achsen gestaltet, um den Zugpunkt in den Bereich zwischen den Messern 31, 33 zu legen.

Die Zugstange 50 ist mittels einer Lagerbuchse 53 um die Drehachse D verschwenkbar an das Zugseil 51 angelenkt, so dass eine Kopplung des bewegbaren Messers 33 mit dem Schwenkhebel 13 unabhängig von einer Winkelposition des Messersatzes 3 erfolgt. Die Lagerbuchse 53 ist in dem Gehäuse 10 verschieblich gelagert, um so eine Bewegung des Zugseils 51 auf die Zugstange 50 zu übertragen.

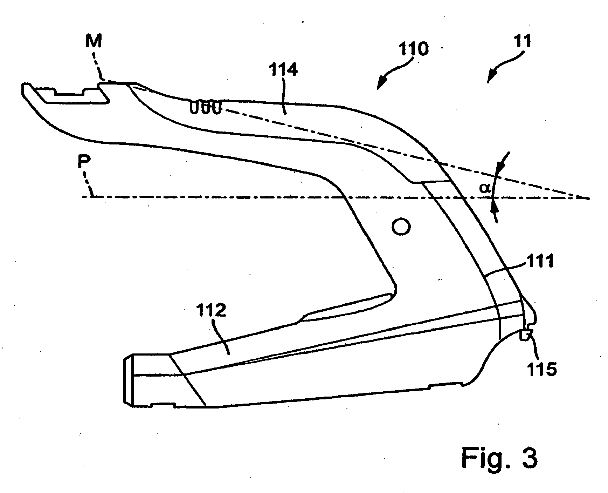

Fig. 3 zeigt den Griffkörper 11 mit dem Griffteil 110, dem Basisteil 111 und der Verlängerung 112, welche das in Fig. 1 und 2 dargestellte Gehäuse 10 zumindest teilweise abdeckt. An dem Griffteil 110 ist eine obere Handauflage 114 vorgesehen, an welcher eine Handinnenfläche bei einer Bedienung der Grasschere liegt. Der Griffkörper 11 und insbesondere das Griffteil 110 sind so gestaltet, dass sich eine ergonomisch besonders günstige Winkelausrichtung der Handauflage 114 ergibt. Die dargestellte Handauflage 114 ist nicht gerade, sondern konvex gekrümmt, so dass eine gute Anschmiegung an eine Handinnenfläche möglich ist. Eine mittlere Ausrichtung der Handauflage 114 ist durch einen Gerade M dargestellt. Die Gerade M ist bezüglich einer Schneidebene geneigt. In Figur 3 ist eine Parallele P zu einer in Fig. 3 nicht dargestellten Schneidebene wiedergegeben. Die Gerade M ist bezüglich der Schneidebene und damit auch der Parallele P um einen Winkel a zwischen 5° und 25° geneigt. In dem dargestellten Ausführungsbeispiel beträgt der Winkel α ca. 14°.

Wie in Fig. 3 weiter erkennbar ist, ist an dem Griffkörper 11 ein Rastelement zur Verrastung mit dem in Figur 1 und 2 dargestellten Gehäuse 10 ausgeformt.

Für eine Anpassung an individuelle Bedürfnisse eines Nutzers ist in der dargestellten Ausführungsform der Griffkörper 11 verschwenkbar an dem in Fig. 1 und 2 dargestellten Gehäuse 10 gelagert, so dass ein Winkel zwischen dem Griffteil 110 und der Schneidebene S, insbesondere zwischen der Handauflage 114 und der Schneidebene S, variierbar ist. Ein Verschwenken des Griffkörpers 11 ist beispielsweise mittels einer nicht dargestellten Rändelschraube und/oder einer Taste möglich. Der Griffkörper 11 ist in dem dargestellten Ausführungsbeispiel um die in Fig. 2 sichtbare Achse 520 des Umlenkmittels 52 verschwenkbar. Durch Verschwenken des Griffkörpers 11 wird auch die Achse 12 verschwenkt. Ein zulässiger Winkel zum Verschwenken des Griffkörpers 11 ist begrenzt. Eine Begrenzung ist in einem Ausführungsbeispiel so gestaltet, dass der Neigungswinkel α minimal ca. 5° und maximal ca. 25° beträgt.

## Patentansprüche

1. Grasschere mit einer Griffvorrichtung (2), umfassend einen mit einem Gehäuse (10) verbundenen Griffkörper (11) mit einem Griffteil (110) und einen relativ zu dem Griffkörper (11) verschwenkbaren Schwenkhebel (13) zur Betätigung eines schwenkbaren Scherblatts (33), wobei der Schwenkhebel (13) in einem bezüglich der Längserstreckung des Griffteils (110) hinteren Bereich mit dem Griffkörper (11) mittels einer Schwenkachse (12) verbunden ist und eine Schwenkachse der Scherblätter (31, 33) im Wesentlichen senkrecht zu der Schwenkachse (12) des Schwenkhebels (13) verläuft.

2. Grasschere nach Anspruch 1, **dadurch gekennzeichnet, dass** eine Kraftübertragung von dem Schwenkhebel (13) auf das schwenkbare Scherblatt (33) mittels mindestens eines auf Zug belastbaren Kraftübertragungselements, insbesondere eines Bands, eines Seils (51), eines Drahtseils oder dergleichen, erfolgt.

3. Grasschere nach Anspruch 2, **dadurch gekennzeichnet, dass** das Kraftübertragungselement (51) zwischen dem Schwenkhebel (13) und dem schwenkbaren Scherblatt (33) über mindestens ein Umlenkmittel, insbesondere eine Rolle (52) umgelenkt ist.

4. Grasschere nach Anspruch 3, **dadurch gekennzeichnet, dass** das Umlenkmittel (52) schwenkbar in dem Gehäuse (10) und/oder dem Griffkörper (11) gelagert ist.

5. Grasschere nach Anspruch 4, **dadurch gekennzeichnet, dass** das Umlenkmittel (52) und das Kraftübertragungselement (51) zumindest teilweise als gemeinsames Bauteil gestaltet sind.

6. Grasschere nach einem der Ansprüche 1 bis 5, **dadurch gekennzeichnet, dass** der Griffkörper (11) eine Handauflage (114) aufweist, wobei der Griffkörper (11) an dem Gehäuse (10) in mindestens einer Position anbringbar ist, so dass eine mittlere Ausrichtung (M) der Handauflage (114) einen Neigungswinkel (α) zwischen 5° und 25°, insbesondere zwischen 10° und 20° mit der Schneidebene (S) einschließt.

7. Grasschere nach einem der Ansprüche 1 bis 6, **dadurch gekennzeichnet, dass** der Griffkörper (11) an dem Gehäuse (10) verschwenkbar angebracht ist, so dass ein Neigungswinkel zwischen dem Griffteil (110) und der Schneidebene (S) variierbar ist.

8. Grasschere nach einem der Ansprüche 1 bis 7, **dadurch gekennzeichnet, dass** die Griffvorrichtung (2) so an dem Gehäuse (10) angebracht ist, dass das Griffteil (11) sich von einem hinteren Ende der Grasschere (1) in Richtung eines vorderen Endes erstreckt, und die Grasschere (1) an dem Griffteil (11) für einen Gebrauch so ergreifbar ist, dass der Schwerpunkt (Z) der Grasschere (1) sich unterhalb des Griffteils (110) befindet.

9. Grasschere nach Anspruch 8, **dadurch gekennzeichnet, dass** der Griffkörper (11) ein Basisteil (111) aufweist, wobei das Griffteil (110) mittels des Basisteils (111) mit dem Gehäuse (10) verbunden ist und das Basisteil (111) mit einer Schneidebene (S) einen Neigungswinkel zwischen 30° und 90°, vorzugsweise zwischen 40° und 80°, insbesondere zwischen 50° und 70° einschließt.

10. Grasschere nach einem der Ansprüche 1 bis 9, **dadurch gekennzeichnet, dass** an einem freien Ende des Griffteils (110) ein von der Schneideben (S) weg weisender Vorsprung (113) ausgeformt ist.

11. Grasschere nach einem der Ansprüche 1 bis 10, **dadurch gekennzeichnet, dass** der Schwenkhebel (13) in eine Position verschwenkbar ist, in welcher sich der Schwenkhebel (13) im Wesentlichen parallel zu dem Griffteil (111) des Griffkörpers (11) erstreckt.

## Claims

1. Grass shears having a handle device (2), comprising a handle body (11), which is connected to a housing (10) and has a handle part (110), and also comprising a pivoting lever (13), which can be pivoted relative to the handle body (11) and is intended for actuating a pivotable shears blade (33), wherein the pivoting lever (13) is connected to the handle body (11) by means of a pivot pin (12) in a rear region, as seen in relation to the longitudinal extent of the handle part (110), and a pivot pin of the shears blades (31, 33) runs essentially perpendicularly to the pivot pin (12) of the pivoting lever (13).

2. Grass shears according to Claim 1, **characterized in that** force is transmitted from the pivoting lever (13) to the pivotable shears blade (33) by means of at least one force-transmission element, in particular a belt, a cable (51), a wire cable or the like, which can be subjected to tensile loading.

3. Grass shears according to Claim 2, **characterized in that** the force-transmission element (51) is deflected between the pivoting lever (13) and the pivotable shears blade (33) via at least one deflecting means, in particular a roller (52).

4. Grass shears according to Claim 3, **characterized in that** the deflecting means (52) is mounted in a pivotable manner in the housing (10) and/or the handle body (11).

5. Grass shears according to Claim 4, **characterized in that** the deflecting means (52) and the force-transmission element (51) are configured, at least in part, in the form of a joint component.

6. Grass shears according to one of Claims 1 to 5, **characterized in that** the handle body (11) has a hand rest (114), wherein the handle body (11) can be fitted on the housing (10) in at least one position such that a central orientation (M) of the hand rest (114) encloses an angle of inclination (α) of between 5° and 25°, in particular between 10° and 20°, with the cutting plane (S).

7. Grass shears according to one of Claims 1 to 6, **characterized in that** the handle body (11) is fitted in a pivotable manner on the housing (10) such that it is possible to vary an angle of inclination between the handle part (110) and the cutting plane (S).

8. Grass shears according to one of Claims 1 to 7, **characterized in that** the handle device (2) is fitted on the housing (10) such that the handle part (11) extends from a rear end of the grass shears (1) in the direction of a front end, and the grass shears (1) can be gripped by the handle part (11) for use such that the centre of gravity (Z) of the grass shears (1) is located beneath the handle part (110).

9. Grass shears according to Claim 8, **characterized in that** the handle body (11) has a base part (111), wherein the handle part (110) is connected to the housing (10) by means of the base part (111) and the base part (111) encloses an angle of inclination of between 30° and 90°, preferably between 40° and 80°, in particular between 50° and 70°, with a cutting plane (S).

10. Grass shears according to one of Claims 1 to 9, **characterized in that** a protrusion (113) which is oriented away from the cutting plane (S) is formed at a free end of the handle part (110).

11. Grass shears according to one of Claims 1 to 10, **characterized in that** the pivoting lever (13) can be pivoted into a position in which the pivoting lever (13) extends essentially parallel to the handle part (111) of the handle body (11).

## Revendications

1. Cisaille à gazon avec un dispositif de préhension (2), comprenant un corps de préhension (11) relié à un boîtier (10), avec une partie de préhension (110) et un levier pivotant (13) pouvant pivoter par rapport au corps de préhension (11) pour l'actionnement d'une lame de cisaille pivotante (33), dans laquelle le levier pivotant (13) est relié dans une région arrière par rapport à l'extension longitudinale de la partie de préhension (110) au corps de préhension (11) au moyen d'un axe de pivotement (12) et un axe de pivotement des lames de cisaille (31, 33) est essentiellement perpendiculaire à l'axe de pivotement (12) du levier pivotant (13).

2. Cisaille à gazon selon la revendication 1, **caractérisée en ce qu'**une transmission de force du levier pivotant (13) à la lame de cisaille pivotante (33) est effectuée au moyen d'au moins un élément de transmission de force sollicité en traction, en particulier d'une bande, d'un câble (51), d'un câble métallique ou analogue.

3. Cisaille à gazon selon la revendication 2, **caractérisée en ce que** l'élément de transmission de force (51) entre le levier pivotant (13) et la lame de cisaille pivotante (33) est dévié au moyen d'au moins un moyen de déviation, en particulier un galet (52).

4. Cisaille à gazon selon la revendication 3, **caractérisée en ce que** le moyen de déviation (52) est monté de façon pivotante dans le boîtier (10) et/ou dans le corps de préhension (11).

5. Cisaille à gazon selon la revendication 4, **caractérisée en ce que** le moyen de déviation (52) et l'élément de transmission de force (51) sont configurés au moins en partie comme composant commun.

6. Cisaille à gazon selon l'une quelconque des revendications 1 à 5, **caractérisée en ce que** le corps de préhension (11) présente une manette (114), dans laquelle le corps de préhension (11) peut être amené sur le boîtier (10) dans au moins une position, de telle manière qu'une orientation moyenne (M) de la manette (114) forme un angle d'inclinaison (α) compris entre 5° et 25°, en particulier entre 10° et 20°, avec le plan de coupe (S).

7. Cisaille à gazon selon l'une quelconque des revendications 1 à 6, **caractérisée en ce que** le corps de préhension (11) est monté de façon pivotante sur le boîtier (10), de telle manière qu'un angle d'inclinaison entre la partie de préhension (110) et le plan de coupe (S) puisse être modifié.

8. Cisaille à gazon selon l'une quelconque des revendications 1 à 7, **caractérisée en ce que** le dispositif de préhension (2) est monté d'une telle manière sur le boîtier (10), que la partie de préhension (11) s'étende à partir d'une extrémité arrière de la cisaille à gazon (1) en direction d'une extrémité avant, et la cisaille à gazon (1) peut être saisie à la partie de préhension (11) en vue d'une utilisation, de telle manière que le centre de gravité (Z) de la cisaille à gazon (1) se trouve en dessous de la partie de préhension (110).

9. Cisaille à gazon selon la revendication 8, **caractérisée en ce que** le corps de préhension (11) présente une partie de base (111), dans laquelle la partie de préhension (110) est reliée au boîtier (10) au moyen de la partie de base (111) et la partie de base (111) forme avec un plan de coupe (S) un angle d'inclinaison compris entre 30° et 90°, de préférence entre 40° et 80°, en particulier entre 50° et 70°.

10. Cisaille à gazon selon l'une quelconque des revendications 1 à 9, **caractérisée en ce qu'**une saillie (113) s'écartant du plan de coupe (S) est formée à une extrémité libre de la partie de préhension (110).

11. Cisaille à gazon selon l'une quelconque des revendications 1 à 10, **caractérisée en ce que** le levier pivotant (13) peut pivoter dans une position, dans laquelle le levier pivotant (13) est essentiellement parallèle à la partie de préhension (111) du corps de préhension (11).
